Europäisches Patentamt

European Patent Office

Office européen des brevets

(11) Veröffentlichungsnummer: **0 270 133 B1**

# EUROPÄISCHE PATENTSCHRIFT

(45) Veröffentlichungstag der Patentschrift: **29.01.92**

(21) Anmeldenummer: **87118613.6**

(22) Anmeldetag: **25.10.83**

(51) Int. Cl.⁵: **B65G 47/24**, B07C 5/02

(60) Veröffentlichungsnummer der früheren Anmeldung nach Art. 76 EPÜ: **0 118 593**

---

(54) **Teilezuführeinrichtung.**

---

(30) Priorität: **25.10.82 AT 3901/82**

(43) Veröffentlichungstag der Anmeldung:
**08.06.88 Patentblatt 88/23**

(45) Bekanntmachung des Hinweises auf die Patenterteilung:
**29.01.92 Patentblatt 92/05**

(84) Benannte Vertragsstaaten:
**AT CH DE FR GB IT LI NL SE**

(56) Entgegenhaltungen:
**CH-A- 537 248**
**DE-A- 2 842 053**
**DE-A- 3 033 686**
**US-A- 3 710 922**

(73) Patentinhaber: **STIWA-Fertigungstechnik Sticht Gesellschaft m.b.H Steinhüblstrasse 4 A-4800 Attnang-Puchheim(AT)**

(72) Erfinder: **Sticht, Walter Karl-Heinrich-Waggerl-Strasse 8 A-4800 Attnang-Puchheim(AT)**

(74) Vertreter: **Wolke, Heidemarie, Dr. Stadtplatz 7 A-4400 Steyr(AT)**

## Beschreibung

Eine bekannte Teilezuführeinrichtung - gemäß CH-A- 537 248, die eine Vorrichtung gemäß dem ersten Teil des Patentanspruchs offenbart - ist einem Vorratsbehälter und einer Fördervorrichtung für die Teile eine Orientier- bzw. Vereinzelungsvorrichtung nachgeordnet, die eine mit einem Antrieb verbundene Verteilvorrichtung aufweist. Diese weist mit unterschiedlichen Förderwegen zusammenwirkende Ausgabestellen auf. Diese Ausgabestellungen werden bei der bekannten Teilezuführeinrichtung durch den Förderkanal der Abgabevorrichtung bzw. den Eingang zum Vorratsbunker der Teile gebildet. Mit der Verteilvorrichtung werden die Teile an einer Überwachungsvorrichtung vorbeibewegt, die die Lage der Teile feststellt und gleichzeitig überprüft, um welche Teileart es sich handelt.

Stimmt die Lage der Teile mit der gewünschten Lage nicht überein, oder handelt es sich um andere als die gewünschte Art von Teilen, so werden die Teile mit der Verteilvorrichtung weiterbewegt und im Eingang abgeworfen. Befindet sich dagegen ein Teil der gewünschten Art in einer gewünschten Lage, so wird dieser durch die Verteilvorrichtung, insbesondere einen gesonderten Schieber, in den Bereich des Förderkanals ausgeworfen. Der somit in seiner gewünschten Lage befindliche Teil wird dann einer Abgabestelle zugeführt, in der sich alle Teile in der gleichen, richtigen Orientierung befinden. Nachteilig ist bei dieser Vorrichtung und dem mit dieser Vorrichtung verwirklichten Verfahren, daß die ansich richtig liegenden Teile bewegt werden müssen und somit beim Auswerten die Gefahr besteht, daß sie ihre richtige Lage verändern. Dazu kommt, daß nur ein geringer Teil der der Verteilvorrichtung zugeführten Teile sich in der gewünschten Ausrichtung befinden und somit die in der Zeiteinheit der Abgabestelle zugeführten Anzahl der richtig orientierten Teile, vor allem dann, wenn diese mehrere stabile Lagen einnehmen können, sehr gering ist.

Weiters ist durch die US-A 3710 922 auch eine Teilezuführvorrichtung bekannt, bei der im Bereich einer durchgehenden Förderstrecke ein Auswerfer vorgesehen ist, der in der richtigen Lage befindliche Teile hindurchläßt, jedoch Teile mit unrichtiger Orientierung auswirft. Auch bei dieser Vorrichtung ist es daher nur möglich, jene Teile zu verwerten, die im Bereich der Vorteilvorrichtung bereits ihre exakte, gewünschte Lage aufweisen, so daß die Ausstoßmenge der mit einer derartigen Teilezuführvorrichtung vereinzelter Teile gering ist. Hinzu kommt, daß zu große Teile, die sich in der richtigen Lage befinden, zuerst erkannt werden müssen und somit zu einem Stau führen können.

Es ist bereits eine Teilezuführeinrichtung bekannt - DE-OS 30 33 686-, die einen Vorratsbunker für diese Teile, eine Fördervorrichtung sowie eine dieser nachgeordnete Orientiervorrichtung aufweist. Im Förderweg der vororientierten Teile ist eine Feststelleinrichtung zum Ermitteln der Lage bzw. der Stellung der Teile angeordnet. In Abhängigkeit von der mit der Feststelleinrichtung ermittelten Lage eines Teiles wird dieses unter Verwendung einer Lageveränderungseinrichtung in eine vorbestimmte Soll-Lage gebracht. Die in der Soll-Lage befindlichen Teile werden einer Montageeinrichtung zugeführt. Der Zeitaufwand, den die Lageveränderungseinrichtung benötigt, um die in verschiedener Lage ankommenden Teile in ihre gewünschte Soll-Lage zu bringen, begrenzt die Ausstoßleistung dieser Teilezuführeinrichtung. Bei höheren Stückzahlen sind meist mehrere, parallel zueinander angeordnete Teilezuführeinrichtungen vorzusehen, um die notwendige Teilestückzahl für eine Montage- bzw. Verpackungsmaschine zur Verfügung stellen zu können.

Der vorliegenden Erfindung liegt die Aufgabe zugrunde, eine Teilezuführeinrichtung zu schaffen, bei der im Zuge des Förderweges zum Antransport der Teile und zum Ausrichten derselben Teile mit falschen Abmessungen ausgeschieden werden können.

Diese Aufgabe der Erfindung wird durch die Merkmalskombination des Patentanspruches gelöst. Vorteilhaft ist dabei, daß nicht nur falsch liegende Teile einwandfrei entfernt werden können, sondern darüber hinaus die Abmessung der mit der Verteilvorrichtung behandelten Teile exakt überwacht werden können.

Zum besseren Verständnis der Erfindung wird diese anhand der in den Zeichnungen dargestellten Ausführungsbeispiele näher erläutert:

Es zeigen:

Fig. 1    eine Teilezuführeinrichtung mit einer Verteilvorrichtung, die einer Montagemaschine zugeordnet ist, in schaubildlicher Darstellung;

Fig. 2    die Verteilvorrichtung gemäß Fig.1 in Stirnansicht, geschnitten, gemäß den Linien II-II in Fig.1;

Fig. 3    einen Förderweg in Stirnansicht, teilweise geschnitten, mit einer diesem zugeordneten erfindungsgemäßen Verteilvorrichtung.

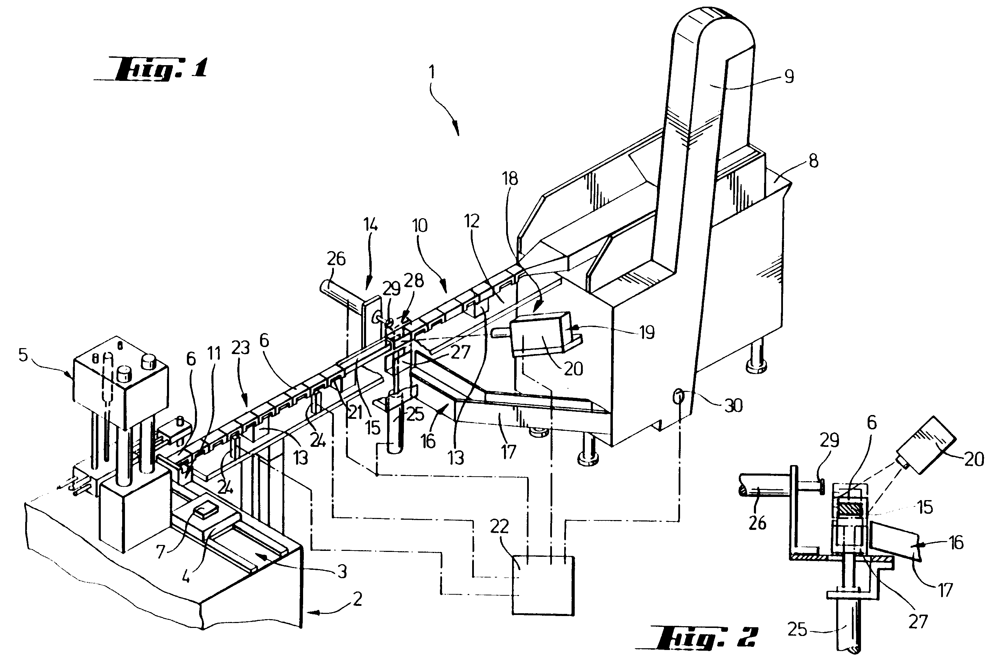

In Fig.1 ist eine Teilezuführeinrichtung 1 dargestellt, die einer Montagemaschine 2 zugeordnet ist. Auf einer Führungsbahn 3 dieser Montagevorrichtung 2 sind Werkstückträger 4 verfahrbar angeordnet. Im Bereich einer Handhabungsvorrichtung 5 werden die Werkstückträger 4 angehalten, um einen mit der Teilezuführeinrichtung 1 herantransportierten Teil 6 auf einem, am Werkstückträger 4 liegenden Werkstück 7 zu montieren. Die Teilezuführeinrichtung 1 umfaßt einen Vorratsbunker 8, eine Fördervorrichtung 9 sowie eine dieser nachgeordnete Orientiervorrichtung 10 und eine Vereinzelungsvorrichtung 11.

Im Verlauf der Orientiervorrichtung 10, die einen Linearförderer 12 umfaßt, der über Vibrationsantriebe 13 in Schwingungen versetzt wird, ist eine Verteilvorrichtung 14 angeordnet. Ein Förderweg 15 wird durch eine die Teile 6 aufnehmende Führungsleiste des Linearförderers 12 und ein weiterer Förderweg 16 durch eine Rutsche 17, die mit dem Vorratsbunker 8 der Fördervorrichtung 9 verbunden ist, gebildet.

Der Verteilvorrichtung 14 ist eine Überwachungseinrichtung 18, die durch eine Lageerkennungsvorrichtung 19, nämlich eine Fernsehkamera 20, gebildet ist, zugeordnet. Die der Vereinzelungsvorrichtung 11 am Ende des Linearförderers 12 zugeführten Teile 6 müssen eine vorbestimmte Soll-Lage aufweisen, bei der ein Schlitz 21 der Fernsehkamera 20 zugewendet ist. Zur Feststellung, ob nun jeder Teil 6 die der Soll-Lage entsprechende Orientierung aufweist, wird jeder Teil im Bereich der Verteilvorrichtung 14 mittels der Fernsehkamera 20 abgetastet. Je nach der Lage des Teiles 6 werden unterschiedliche Ausgangssignale von der Fernsehkamera 20 an eine Steuervorrichtung 22 übermittelt. Entspricht die Stellung des Teiles 6 der gewünschten Orientierung, bei der der Schlitz 21 der Fernsehkamera 20 zugeordnet ist, so kann der Teil 6 ohne Behinderung der Verteilvorrichtung 14 passieren und wird einer - im Zuge des Linearförderers 12 angeordneten - Pufferstrecke 23 zugeführt. Diese ist durch zwei Füllstandsmelder 24, die einen Minimum- und Maximumfüllstand anzeigen, begrenzt. Die Ausgangssignale der Füllstandsmelder 24 werden der Steuervorrichtung 22 zugeführt. Weist ein Teil 6, wie jener, der sich in der Zeichnung im Aufnahmebereich der Fernsehkamera 20 befindet, eine falsche Orientierung auf, so wird anhand des von der Fernsehkamera 20 an die Steuervorrichtung 22 übermittelten Signales die Abweichung von der Soll-Lage festgestellt. Über die Steuervorrichtung 22 werden dann ein Antrieb 25 und ein Antrieb 26 aktiviert. Mit dem Antrieb 25 wird eine Umlenkvorrichtung 27 der Verteilvorrichtung 14 in eine mit strichlierten Linien dargestellte und dem Förderweg 16 zugeordnete Ausgabestellung 28 verstellt. Danach wird der Antrieb 26 eines Auswerfers 29 der Verteilvorrichtung 14 aktiviert.

Wie besser in Figur 2 ersichtlich, wird der unrichtig orientierte Teil 6 mit der Umlenkvorrichtung 27 von der Förderleiste des Förderweges 15 abgehoben, sodaß er mit dem Auswerfer 29 durch Betätigung des Antriebes 26 in den Förderweg 16, nämlich die Rutsche 17, abgeworfen werden kann. Der Teil 6 rutscht dann zurück in den Vorratsbehälter 8 im Bereich der Fördervorrichtung 9. Die nicht orientierten Teile 6 werden daher, ohne die Zufuhr der weiteren von der Orientiervorrichtung 10 kommenden Teile zu behindern, ausgeworfen und durch einen neuen Zuführvorgang über die Vorrichtung 9 und einen neuen Orientiervorgang im Bereich der Orientiervorrichtung 10 in die gewünschte Orientierung verbracht.

Der Vorteil dieser Anordnung liegt darin, daß mittels der Fernsehkamera 20 nur zwischen in der Soll-Lage und nicht in der Soll-Lage befindlichen Teilen zu unterscheiden ist, wobei dies mit der Fernsehkamera 20 für kompliziert geformte Teile mit hoher Sicherheit und sehr rasch bzw. ohne großen technischen Aufwand möglich ist, während Behinderungen der Zufuhr der Teile 6 durch ein im Bereich des Förderweges 15 erfolgendes Ausrichten der Teile in die richtige Stellung wegfällt.

Die Umlenkvorrichtung 27 kann darüberhinaus aber auch für den Fall, daß die Pufferstrecke 23 mit Teilen 6 gefüllt ist und ein dementsprechendes Signal vom Füllstandsmelder 24 an die Steuervorrichtung 22 abgegeben wird zur Ableitung der von der Orientiervorrichtung 10 kommenden Teile zu rück in den Vorratsbehälter 8 verwendet werden, um einen Rückstau der Teile 6 bis in den Bereich der Fördervorrichtung 9 zu vermeiden. Gleichermaßen ist es selbstverständlich möglich, mit dem den Maximumfüllstand anzeigenden Füllstandmeßwertgeber 24 über die Steuervorrichtung 22 einen Antriebsmotor 30 der Fördervorrichtung 9 ein- und auszuschalten. Gleichermaßen kann der Förderweg 15 auch aus mehreren unabhängig voneinander schaltbaren, hintereinander liegenden Vibrationsförderern gebildet sein, um beispielsweise bei völlig gefüllter Pufferstrecke 22 die vorgeschaltete Orientiervorrichtung 10 abschalten zu können. Anstelle der Fernsehkamera 20 ist es selbstverständlich auch möglich, entsprechende andere elektrooptische Einrichtungen, z.B. Zeilenkameras oder dgl., zu verwenden, um die äußere Form bzw. die Lage des zu prüfenden Teiles erfassen zu können.

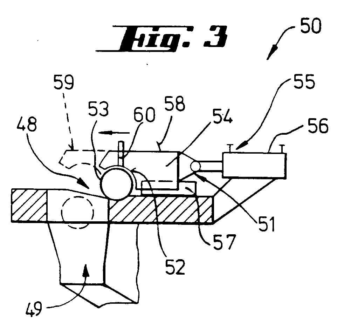

In Figur 3 sind ein Förderweg 48 und ein Förderweg 49 gezeigt. Im Bereich dieser beiden Förderwege 48,49 ist eine erfindungsgemäße Verteilvorrichtung 50 vorgesehen. Dieser Verteilvorrichtung ist eine Überwachungsvorrichtung 51 zugeordnet, die durch ein Kaliber 52 zum Prüfen der Außenabmessungen eines Teiles 53 gebildet ist. Das Kaliber 52 ist aufeinem Schieber 54 einer Umlenkvorrichtung 55 angeordnet. Der Schieber 54 istmit einem Antrieb 56 gekuppelt, mit welchem er entlang einer Führungsbahn 57 quer zum Förderweg 48 aus einer Ausgabestellung 58 in eine Ausgabestellung 59 verstellbar ist. Je nach Stellung des Schiebers 54 können die Teile 53 am Förderweg 48 entlangwandern bzw. werden dem Förderweg 49 zugeführt. Im Bereich der den Teilen 53 zugewandten Kaliberfläche des Kalibers 52 ist ein Fühler 60 angeordnet. Mit diesem Fühler 60 kann entweder festgestellt werden, daß ein Teil 53 mit einer zu großen Außenabmessung im Kaliber 52 festgeklemmt ist - der Fühler 60 gibt dann z.B. ein Dauersignal ab - oder es kann festgestellt werden, daß über längere Zeit kein Teil 53 den Fühler 60 passiert hat, so daß anzunehmen ist, daß sich ein Teil 53 mit zu großer Außenabmessung im Einlauf des Kalibers 52 verklemmt hat. In beiden Fällen wird über die Steuervorrichtung 22 der Antrieb 56 beispielsweise mit Druckluft beaufschlagt und der Schieber 54 in die mit strichlierten Linien gezeichnete Ausgabestellung 59 verschoben, so daß Teile 53 mit unrichtigen Außenabmessungen dem Förderweg 49 zugeführt werden und nur Teile mit richtigen Außenabmessungen ungehindert entlang des Förderweges 48 das Kaliber 52 passieren können.

Die Ausbildung der Fördervorrichtung, der Schikanen bzw. der Orientiervorrichtungen sowie der eventuell benötigten Entwirrvorrichtungen - beim Zuführen verwirrter Teile - kann bevorzugt gemäß unserer DE-PS 27 07 856 bzw. der DE-OS 31 35 581 oder 29 34 146 erfolgen.

**Patentansprüche**

1. Teilezuführeinrichtung (1), insbesondere für Montage- bzw. Verpackungsmaschinen (2), mit einem Vorratsbunker (8) für diese Teile (6), einer Fördervorrichtung (9) sowie einer dieser nachgeordneten Orientier- bzw. Vereinzelungsvorrichtung (10,11), der eine mit einem Antrieb verbundene Umlenkvorrichtung (55) zugeordnet ist, die mit unterschiedlichen Förderwegen (48,49) zusammenwirkende Ausgabestellungen (58,59) aufweist und deren Antrieb (56) mit einer Steuervorrichtung (22) wirkverbunden ist und in Abhängigkeit von mit einer Überwachungsvorrichtung (51) ermittelten Kennwerten eines Teiles (6) aktivierbar ist, dadurch gekennzeichnet, daß die Umlenkvorrichtung (55) durch einen quer zu einem Förderweg (48) verstellbaren Schieber (54) eines die Außenabmessungen eines Teiles (53) festlegenden Kalibers (52) gebildet ist und daß mit einem Fühler (60) festgestellt wird, ob über eine längere Zeit kein Teil den Kaliber (52) passiert hat, worauf über die Steuervorrichtung (22) der Antrieb (56) für die Verstellung des Schiebers (54) beaufschlagt wird.

**Claims**

1. A feeding device (1) for parts, in particular for assembly- and packing machines (2), with a storage bin (8) for these parts (6), with a conveying device (9) and also with an orientation or respectively separation device (10,11), arranged thereafter, with which there is associated a deflector device (55) connected with a drive, which deflector device has distribution points (58,59) cooperating with different conveying paths (48,49), and the drive (56) of which is operatively connected with a control device (22) and is able to be activated as a function of characteristics of a part (6) which have been determined by a monitoring device (51), characterised in that the deflector device (55) is formed by a slider (54), adjustable transversely to a conveying path (48), of a gauge (52) which establishes the outer dimensions of a part (53), and that it is established by means of a sensor (60) whether no part has passed through the gauge (52) over a lengthy period of time, whereupon the drive (56) for the adjustment of the slider (54) is acted upon via the control device (22).

**Revendications**

1. Dispositif d'alimentation en pièces (1), en particulier pour des machines de montage ou respectivement d'emballage (2), avec une trémie d'alimentation (8) de ces pièces (6), un dispositif de déplacement (9) ainsi qu'un dispositif d'orientation ou respectivement de séparation (10,11) qui le suit, auquel est affecté un dispositif de déviation (55) relié à un entraînement, qui présente des positions de sortie (58,59) coopérant avec divers chemins de déplacement (48,49) et dont l'entraînement (56) est relié de manière active à un dispositif de commande (22) et peut être activé, selon les valeurs caractéristiques d'une pièce (6), obtenues d'un dispositif de surveillance (51), caractérisé en ce que le dispositif de déviation (55) est formé d'un curseur (54) d'un calibre (52) établissant les dimensions externes d'une pièce (53), lequel curseur est mobile transversalement à un chemin de déplacement (48) et en ce qu'on établit, au moyen d'un palpeur (60), si aucune pièce n'a passé le calibre (52) pendant assez longtemps, et alors, l'entraînement (56) pour le déplacement du curseur (54) se trouve sollicité par le dispositif de commande (22).

**Fig. 1**

**Fig. 2**

*Fig. 3*